# EUROPEAN PATENT SPECIFICATION

(11) **EP 3 285 153 B1**
(45) Date of publication and mention of the grant of the patent: **17.02.2021**
(21) Application number: 15888961.8
(22) Date of filing: 21.08.2015
(51) Int. Cl.: G06F 3/044, G06F 3/041

(54) **CAPACITIVE TOUCH SCREEN AND MANUFACTURING PROCESS THEREOF, AND TOUCH DISPLAY PANEL**
KAPAZITIVER BERÜHRUNGSBILDSCHIRM UND HERSTELLUNGSVERFAHREN DAFÜR SOWIE BERÜHRUNGSANZEIGETAFEL
ÉCRAN TACTILE CAPACITIF ET PROCÉDÉ DE FABRICATION ASSOCIÉ, ET PANNEAU D'AFFICHAGE TACTILE

(30) Priority: 17.04.2015 CN 201510185776
(43) Date of publication of application: 21.02.2018
(73) Proprietor: BOE Technology Group Co., Ltd., Beijing 100015 (CN); Hefei BOE Optoelectronics Technology Co., Ltd., Hefei, Anhui 230012 (CN)
(72) Inventor: WANG, Sheng, Beijing 100176 (CN)
(74) Representative: Klunker IP Patentanwälte PartG mbB
(86) International application number: PCT/CN2015/087828
(87) International publication number: WO 2016/165260

(56) References cited:
- WO-A1-2015/034094
- CN-A- 102 096 534
- CN-A- 102 375 635
- CN-A- 102 866 816
- CN-A- 103 455 203
- CN-A- 103 529 591
- CN-A- 103 941 936
- CN-A- 104 750 347
- DE-A1-102013 004 259
- US-A1- 2007 242 055
- US-A1- 2008 014 665
- US-A1- 2012 013 554
- US-A1- 2012 119 232
- US-A1- 2013 222 726
- US-A1- 2014 125 909
- US-A1- 2014 145 971
- US-A1- 2014 335 350

## Description

### TECHNICAL FIELD

The present invention relates to a capacitive touch screen and a preparation method thereof and a touch display panel.

### BACKGROUND

With rapid development of tablet smart phones and tablet computers, a touch screen technology has developed rapidly. The touch screen is mainly divided into a resistive type, a capacitive type and an infrared optical type and so on. The touch screen of resistive type is to determine a touch position by pressing to cause change of resistances between two layers of electrodes or electrical connection of the two layers of electrodes; the touch screen of capacitive type is to determine the touch position for example by a capacitance change caused by a human touch; and the touch screen of infrared optical type is to determine the touch position by blocking infrared light to be received for example with fingers. The capacitive touch screen is sensitive, so that the capacitive touch screen is widely used in mobile products.

The capacitive touch screens on the market mainly include: a Glass+Film +Film (GFF) touch screen, a One Glass Solution (OGS) touch screen, an On-Cell touch screen and an In-Cell touch screen. The GFF touch screen is to provided a conductive structure (such as, a ITO layer) on a plastic film (such as, a polyethylene terephthalate (PET) film) by etching or printing and to provide a protective glass as an outer layer; the OGS for example is to bond a glass substrate having a touch function on a surface of a liquid crystal panel; the On-Cell touch screen for example is to fabricate an electrode for implementing the touch function on a surface of a color filter substrate, i.e., the electrode for implementing the touch function is located above the liquid crystal cell; and the In-Cell touch screen is to fabricate the electrode for implementing the touch function in the liquid crystal cell (Cell). Considering factors such as lightness, thinness and cost, the On-Cell touch screen and the In-Cell touch screen are future development directions. A fabrication process of the On-Cell touch screen is relatively simple, but easy to cause problems such as scratches on the electrode. A fabrication process of the In-Cell touch screen is relatively complex, and touch signals may easily disturb deflections of liquid crystals.

US 2014/335350 A1 discloses a method for forming a protective coat on an electrode for a touch panel. The method comprises a first step in which a photosensitive layer comprising a photosensitive resin composition containing a binder polymer, a photopolymerizable compound and a photopolymerization initiator is provided on a base material having an electrode for a touch panel, a second step in which prescribed sections of the photosensitive layer are cured by irradiation with active light rays, and a third step in which the sections other than the prescribed sections of the photosensitive layer are removed to form a protective coat comprising the cured sections of the photosensitive layer covering all or a portion of the electrode, wherein the hydroxyl value of the photosensitive resin composition is no greater than 40 mgKOH/g.

US 2012/013554 A1 discloses a touch screen panel and a method of manufacturing the same. The touch screen panel includes a substrate, an electrode forming part positioned on the substrate, and a routing wiring part positioned on the substrate outside the electrode forming part. The electrode forming part includes a plurality of first electrode serials arranged parallel to one another in a first direction and a plurality of second electrode serials arranged to cross the first electrode serials. The routing wiring part includes a plurality of first routing wires respectively connected to the first electrode serials and a plurality of second routing wires respectively connected to the second electrode serials. A plurality of first connection patterns are formed on the same level layer as the first and second routing wires to be separated from one another.

US 2014/145971 A1 discloses a touch panel including a substrate and a transparent conductor pattern. The substrate includes a display area and a first and a second peripheral area located outside and adjacent to two opposite sides of the display area. The transparent conductor pattern is formed on the substrate within the display area and includes a plurality of first electrodes and a plurality of second electrodes corresponding to the first electrodes. The second electrodes respectively have an electrode lead wire. The electrode lead wires of some of the second electrodes are extended into the first peripheral area to connect to a first peripheral wire structure in the first peripheral area while the electrode lead wires of the other second electrodes are extended into the second peripheral area to a second peripheral wire structure in the second peripheral area.

WO 2015/034094 A1 discloses a method for manufacturing a touch panel comprising a metal film, an insulating film and a transparent electrode film. Patterning of the metal film and the insulating film comprises several steps, in each of which a photoresist pattern is formed by printing with the use of a mask for printing and two steps, in each of which patterning is carried out by wet etching that uses the photoresist pattern as a mask. Formation of the transparent electrode film comprises a step in which a patterned transparent electrode film is formed by sputtering with use of a mask for sputtering having an opening pattern that corresponds to a pattern to be formed. By forming a photoresist pattern by printing with use of a mask for printing and by forming a patterned film with use of a mask for sputtering, a photographic process can be eliminated, thereby enabling reduction in the equipment cost and the running cost.

CN 103 529 591 A discloses a color film substrate, a preparation method of the color film substrate, a display panel, a preparation method of the display panel and a display device. The color film substrate comprises a substrate body, a black matrix arranged on the substrate body and an insulation mat arranged above the black matrix, and a pillow layer is arranged between at least one portion of the insulation mat and the black matrix. Due to the facts that the pillow layer is formed on the black matrix and the insulation mat is arranged on the pillow layer, the compression amount of the insulation mat is increased, the risk of the gravity Mura is reduced, the image display quality and the reliability of the display device are improved. In addition, the thickness of the pillow layer can be flexibly set according to the requirement, the continuous changes of the thickness of the pillow layer are achieved, the compression amount of the insulation mat can be flexibly controlled, and not be limited by various kinds of limitations in the prior art, and the strong technological support can be provided for improving the preparation efficiency of the display device and reducing the production cost.

US 2014/125909 A1 discloses a pixel unit, an array substrate, a liquid crystal panel, a display device and a manufacturing method thereof. The pixel unit comprises a thin film transistor, a pixel electrode and a common electrode. The thin film transistor comprises a gate electrode, a gate insulating layer provided on the gate electrode, an active layer provided on the gate insulating layer, a source electrode and a drain electrode provided on the active layer, and a passivation layer provided on the source electrode and the drain electrode. The common electrode is provided directly on the passivation layer; and the pixel electrode is provided under the passivation layer and is connected to the drain electrode of the thin film transistor. For the array substrate, the liquid crystal panel, the display device and the manufacturing method thereof, it is possible to increase view angles, lower power consumption, and increase aperture ratio, thereby improving display quality.

US 2012/119232 A1 discloses a method for manufacturing an array substrate, wherein the procedure for forming a data line, an active layer with a channel, a source electrode, a drain electrode and a pixel electrode comprises applying a photoresist on a data line metal thin film and performing exposure and development processes by using a multi-tone mask so as to form a photoresist pattern including a third thickness region, a second thickness region and a first thickness region whose thicknesses are successively increased, the third thickness region at least corresponding to the pixel electrode, the second thickness region corresponding to the data line, the active layer, the source electrode and the drain electrode, and the first thickness region corresponding to the other regions.

US 2008/014665 A1 discloses a method of fabricating a liquid crystal display device, the method includes the steps of forming a gate electrode and a gate line on a first substrate, forming a gate insulating layer on the gate electrode, forming an active layer on the gate insulating layer and an ohmic contact layer on the active layer, forming source and drain electrodes spaced apart from each other and on the ohmic contact layer, forming a data line that crosses the gate line, etching a portion of the ohmic contact layer between the source and drain electrodes in a chamber of a dry-etching device to expose a portion of the active layer, forming a passivation layer on the first substrate which remains in the chamber, the passivation layer covering the portion of the active layer, forming a pixel electrode connected to the drain electrode, and interposing a liquid crystal layer between the pixel electrode and a second substrate.

US 2007/242055 A1 discloses a top-emitting OLED display having a transparent touch panel, the OLED display includes a substrate, an upper cover plate, an OLED display device, a capacitive touch device and a sealant layer. The OLED device is stacked on the substrate, the capacitive touch device is stacked on the upper cover plate, and the sealant layer combines the substrate and the upper cover plate such that the OLED device and the capacitive touch device are enclosed between the substrate and the upper cover plate. The capacitive touch device includes a first transparent conductive layer, an isolating layer, a second transparent conductive layer and an electromagnetic shielding layer sequentially formed on the upper cover plate. The electromagnetic shielding layer can effectively reduce the electromagnetic interfering between the OLED device and the capacitive touch device.

### SUMMARY

It is an object of the present invention to provide a capacitive touch panel, a preparation method and a touch display panel, which may solve one or more problems in the art.

The object is achieved by the features of the respective independent claims. Further embodiments are defined in the respective dependent claims.

### BRIEF DESCRIPTION OF THE DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.
FIG. 1a is a schematic view of an OGS touch display panel;
FIG. 1b is a schematic view of an On-Cell capacitive touch display panel;
FIG. 2a is a schematic view of a capacitive touch screen in which a touch region, a signal line expansion region and a signal line connection region of a substrate are illustrated;
FIG. 2b is a schematic view of a display region, a touch region corresponding to the display region, a signal line expansion region and a signal line connection region of a display panel in an On-Cell capacitive touch display panel;
FIG. 3a is a schematic view of a capacitive touch screen provided by embodiments of the present disclosure;
FIG. 3b is a schematic view of an OGS touch display panel provided by the embodiments of the present disclosure;
FIG. 3c is a schematic view of an On-Cell capacitive touch display panel provided by the embodiments of the present disclosure;
FIG. 3d is a schematic view of an On-Cell capacitive touch display panel provided by the embodiments of the present disclosure;
FIG. 3e is a schematic view of a GFF touch display panel provided by the embodiments of the present disclosure;
FIG. 4a is a schematic view of forming a transparent conductive film and a photoresist film on a substrate in a preparation method of a capacitive touch screen provided by the embodiments of the present disclosure;
FIG. 4b is a schematic view of exposing and developing the photoresist film to form a photoresist pattern in the preparation method of the capacitive touch screen provided by the embodiments of the present disclosure;
FIG. 4c is a schematic view of etching by using the photoresist pattern as a mask in the preparation method of the capacitive touch screen provided by the embodiments of the present disclosure; and
FIG. 4d is a schematic view of ashing the photoresist pattern in the preparation method of the capacitive touch screen provided by the embodiments of the present disclosure.

### DETAILED DESCRIPTION

In order to make objects, technical details and advantages of the embodiments of the present disclosure apparent, the technical solutions of the embodiment will be described in a clearly and fully understandable way in connection with the drawings related to the embodiments of the present disclosure. It is obvious that the described embodiments are just a part but not all of the embodiments of the present disclosure. Based on the described embodiments herein, those skilled in the art can obtain other embodiment(s), without any inventive work, which should be within the scope of the present disclosure.

In the embodiments of the present disclosure, a photolithographic process is one of the patterning processes. The photolithographic process refers to a process of forming a pattern by forming a film, exposing, developing, etching, ashing and so on with using a photoresist, a mask, an exposing machine, an etching machine and the like.

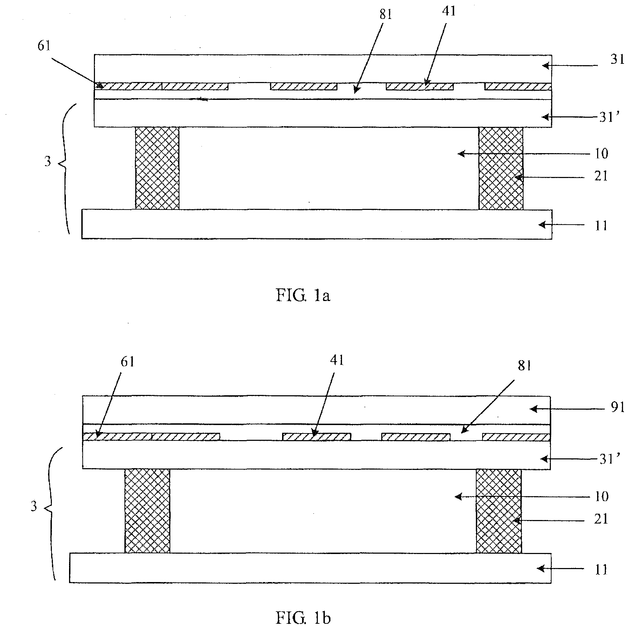

FIG. 1a is a schematic view of an OGS capacitive touch display panel. A plurality of touch electrodes 41 and a plurality of signal lines 61 corresponding to the touch electrodes are provided on a substrate 31 of the OGS touch display panel, a optically clear adhesive layer 81 is provided on the touch electrodes 41 and the signal lines 61, and the substrate 31, the plurality of touch electrodes 41 and the plurality of signal lines 61 provided on the substrate 31 are bonded with a display panel 3 via the optically clear adhesive layer 81. The display panel 3 for example is a liquid crystal panel, and includes an array substrate 11, an opposed substrate 31', and liquid crystals 10 sealed between the array substrate 11 and the opposed substrate 31' by a sealant 21. The opposed substrate and the array substrate are provided opposite to each other, and the opposed substrate and the array substrate are upper and lower substrates of the display panel, respectively; generally, a display structure such as a film transistor array is formed on the array substrate, and a color resin is formed on the opposed substrate. For example, the opposed substrate is a color filter substrate. That is, the substrate 31, the plurality of touch electrodes 41 and the plurality of signal lines 61 provided on the substrate 31 are bonded with the opposed substrate 31' of the display panel 3 via the optically clear adhesive layer 81. At this moment, the substrate 31 may be a glass substrate.

FIG. 1b is a schematic view of an On-Cell capacitive touch display panel. The On-Cell capacitive touch display panel includes a display panel 3 and a touch structure provided on the display panel 3; the display panel 3 is for example a liquid crystal panel and includes an array substrate 11, an opposed substrate 31', and liquid crystals 10 sealed between the array substrate 11 and the opposed substrate 31' by a sealant 21, and meanwhile the opposed substrate 31' serves as a substrate of the touch screen; the touch structure includes a plurality of touch electrodes 41 and a plurality of signal lines 61 corresponding to the plurality of touch electrodes provided on the opposed substrate 31'; a optically clear adhesive layer 81 and a cover plate 91 are sequentially provided on the plurality of touch electrodes 41 and the plurality of signal lines 61; and the substrate 31', the plurality of touch electrodes 41 and the plurality of signal lines 61 provided on the substrate 31' are bonded with the cover plate 91 via the optically clear adhesive layer 81.

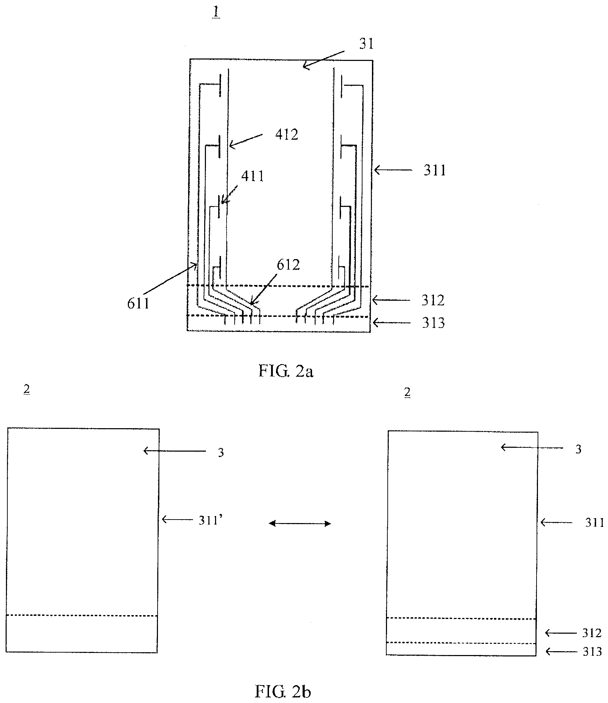

As shown in FIG. 2a, in the above-described capacitive touch screen, the substrate 31 or 31' includes a touch region 311 for touching and a signal line connection region 313 for external connection of the signal lines, the plurality of touch electrodes 41 are provided in the touch region 311, and the plurality of signal lines 61 are routed from the touch region 311 to the signal line connection region 313. The substrate 31 or 31' further includes a signal line expansion region 312, and the plurality of signal lines 61 enter into the touch region 311 after expanded in the signal line expansion region 312.

As shown in FIG. 2b, in the On-Cell capacitive touch display panel, the display panel 3 includes a display region 311' for displaying, for example, the touch region 311 for touching corresponds to the display region 311' for displaying in position; and the display panel 3 further includes the signal line connection region 313 for external connection of the signal lines, the plurality of touch electrodes 41 are provided in the touch region 311, and the plurality of signal lines 61 are routed from the touch region 311 to the signal line connection region 313. The display panel 3 for example further includes the signal line expansion region 312, and the plurality of signal lines 61 enter into the touch region 311 after expanded in the signal line expansion region 312.

The touch electrodes 41 for example include a touch driving electrode Tx and a touch sensing electrode Rx; and the touch driving electrode Tx and the touch sensing electrode Rx for example are formed in a same layer, for example, the touch driving electrode Tx and the touch sensing electrode Rx are formed by a transparent conductive film of a same layer of. In the OGS touch display panel of FIG. 1a and the On-Cell capacitive touch display panel of FIG. 1b, the touch electrodes 41 and the signal lines 61 corresponding to the touch electrodes 41 are shown in FIG. 2a. The touch electrodes 41 include the touch driving electrode 411 and the touch sensing electrode 412; the touch signal lines 61 include a touch driving signal line 611 corresponding to the touch driving electrode 411 and a touch sensing signal line 612 corresponding to the touch sensing electrode 412.

For example, a structure in which a side of the touch sensing electrode 412 is provided with four touch driving electrodes 411 is employed; or a structure in which four touch driving electrodes 411 are provided on both sides of the touch sensing electrode 412 is employed, so that the touch sensing electrode 412 corresponds to eight touch driving electrodes 411. For example, the above structures may serve as a basic touch unit and be repeatedly provided in the touch region in an array manner. The structure of the touch electrode 41 is not specifically limited here. For example, the touch driving electrode 411 and the touch sensing electrode 412 may be exchanged with each other, and accordingly, the touch driving signal line 611 and the touch sensing signal line 612 may be exchanged with each other. For example, in the case that a capacitance between the touch driving electrode Tx and the touch sensing electrode Rx is changed due to a touching of a finger, the touch position is determined by detecting a signal output caused by coupling a touch driving signal on the touch sensing electrode Rx. In this way, the touching operation is implemented.

In the preparation processes of the OGS touch display panel and the On-Cell capacitive touch display panel, after forming the touch electrodes 41 and the signal lines 61, it is necessary to bond a touch flexible print circuit (FPC) board on the signal line connection region 313. However, in the case that the touch FPC is bonded, the touch electrodes 41 are very easily scratched, which reduces a product yield.

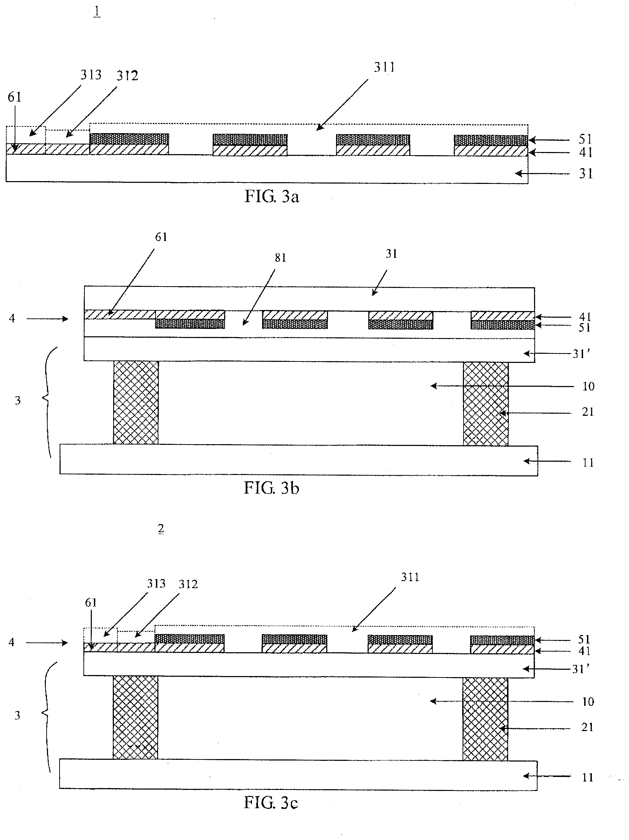

Embodiments of the present disclosure provide a capacitive touch screen 1, as shown in FIG. 3a, the capacitive touch screen 1 comprises: a substrate 31, a plurality of touch electrodes 41 provided on the substrate 31, and a plurality of signal lines 61 corresponding to the plurality of touch electrodes 41; the substrate 31 includes a touch region 311 for touching and a signal line connection region 313 for external connection of the signal lines; the plurality of touch electrodes 41 are provided in the touch region 311, the plurality of signal lines 61 are routed from the touch region 311 to the signal line connection region 313, the plurality of touch electrodes 41 and portions of the plurality of signal lines 61 in the touch region 311 are covered with a photoresist 51, and portions of the plurality of signal lines 61 in the signal line connection region 313 are not covered with the photoresist. Since the plurality of touch electrodes 41 and portions of the plurality of signal lines 61 in the touch region 311 are covered with the photoresist 51, the photoresist 51 protects the electrodes or signal lines therebelow in follow-up processes such as a bonding process. For example, it is referred to FIG. 2a for the touch region 311 and the signal line connection region 313.

For example, in the capacitive touch screen provided by the embodiments of the present disclosure, the touch electrodes 41 comprises a touch driving electrode 411 and/or a touch sensing electrode 412, and accordingly, the touch signal lines 61 comprises a touch driving signal line 611 and/or a touch sensing signal line 612. The touch electrodes 411, 412 and the signal lines 611, 612 are shown in FIG. 2a as an example. The touch electrodes 41 are provided in the touch region.

For example, in the capacitive touch screen provided by the embodiments of the present disclosure, the touch electrodes 41 and the signal lines 61 are provided in a same layer and formed by a transparent conductive film of a same layer, thus the touch electrodes 41 and the signal lines 61 are made of a same material.

For example, in the capacitive touch screen provided by the embodiments of the present disclosure, the touch electrodes 41 are made of a transparent conductive material, such as indium tin oxide (ITO), indium zinc oxide (IZO) and so on.

For example, in an OGS touch screen provided by the embodiments of the present disclosure, an optically clear adhesive (OCA) layer 81 is provided, for example, the formed OGS touch display panel is shown in FIG. 3b. The substrate 31, the plurality of touch electrodes 41 and the plurality of signal lines 61 provided on the substrate 31 and the photoresist covering the plurality of touch electrodes 41 and the plurality of signal lines 61 are bonded with an opposed substrate 31' of a display panel via the optically clear adhesive layer 81. The display panel 3 for example is a liquid crystal panel, and includes an array substrate 11, an opposed substrate 31' and liquid crystals 10 sealed between the array substrate 11 and the opposed substrate 31' by a sealant 21. The opposed substrate and the array substrate are provided opposite to each other, and the opposed substrate and the array substrate are upper and lower substrates of the display panel, respectively. For example, a display structure such as an array of thin film transistors is formed on the array substrate, and a color resin is formed on the opposed substrate. For example, the opposed substrate is a color filter substrate. That is, the substrate 31, the plurality of touch electrodes 41 and the plurality of signal lines 61 provided on the substrate 31 are bonded with the display panel 3 via the optically clear adhesive layer 81.

For example, the substrate 31 further includes a signal line expansion region 312, and the plurality of signal lines 61 enter the touch region 311 after expanded in the signal line expansion region 312. For example, portions of the signal lines 61 in the signal line expansion region 312 are covered with the photoresist. For example, FIG. 2a is referred to for the signal line expansion region 312.

The embodiments of the present disclosure further provide an On-Cell capacitive touch display panel, as shown in FIG. 3c, comprising a display panel 3 and a touch structure 4 provided on the display panel 3; the touch structure 4 includes the plurality of touch electrodes 41, and the plurality of signal lines 61 corresponding to the plurality of touch electrodes 41; the display panel includes a display region for displaying (not shown, referring to the display region 311' in FIG. 2b), the touch region 311 for touching and corresponding to the display region for displaying; the display panel further includes the signal line connection region 313 for external connection of the signal lines; the plurality of touch electrodes 41 are provided in the touch region 311, and the plurality of signal lines 61 are routed from the touch region 311 to the signal line connection region 313; the plurality of touch electrodes 41 and portions of the plurality of signal lines 61 in the touch region 311 are covered with the photoresist 51, and portions of the plurality of signal lines 61 in the signal line connection region 313 are not covered with the photoresist. For example, FIG. 2b is referred to for the display region, the touch region and the signal line connection region.

The touch region 311 for touching corresponds to the display region 311' for displaying, for example, a projection of the display region 311' on the display panel and a projection of the touch region 311 on the display panel have an overlapping region.

For example, an area of the touch region 311 is equal to that of the display region 311'; of course, the area of the touch region 311 may be greater or less than that of the display region 311', which is not limited by the embodiments of the present disclosure.

For example, in the capacitive touch screen provided by the embodiments of the present disclosure, the touch electrodes 41 comprises the touch driving electrode 411 and/or the touch sensing electrode 412; and accordingly, the touch signal lines 61 comprises the touch driving signal line 611 and the touch sensing signal line 612. The touch electrodes 411, 412 and the signal lines 611, 612 thereof are shown in FIG. 2a as an example. The touch electrodes 41 are provided in the touch region.

For example, in the On-Cell capacitive touch display panel provided by the embodiments of the present disclosure, the touch electrodes 41 and the signal lines 61 are provided in a same layer and formed by a transparent conductive film of a same layer of, thus the touch electrodes 41 and the signal lines 61 are made of a same material.

For example, in the On-Cell capacitive touch display panel provided by the embodiments of the present disclosure, the display panel 3 is the liquid crystal panel, and includes the array substrate 11, the opposed substrate 31', and the liquid crystals 10 sealed between the array substrate 11 and the opposed substrate 31' by the sealant 21. The opposed substrate and the array substrate are provided opposite to each other, and the opposed substrate and the array substrate are upper and lower substrates of the display panel, respectively. For example, the display structure such as the array of thin film transistors is formed on the array substrate, and the color resin is formed on the opposed substrate. The opposed substrate 31', for example, is the color filter substrate.

For example, the touch structure 4 is provided on the opposed substrate, as shown in FIG. 3c.

For example, in the On-Cell capacitive touch display panel provided by the embodiments of the present disclosure, the touch electrodes are made of the transparent conductive material, such as indium tin oxide (ITO), indium zinc oxide (IZO) and so on.

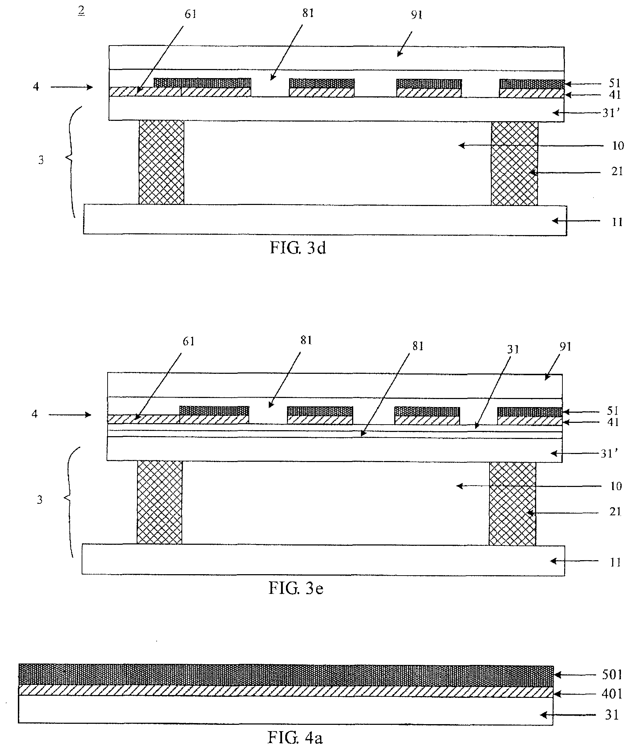

For example, in the On-Cell capacitive touch display panel provided by the embodiments of the present disclosure, the Optically Clear Adhesive (OCA) layer 81 and a cover plate 91 are further provided, as shown in FIG. 3d. The opposed substrate 31', the plurality of touch electrodes 41 and the plurality of signal lines 61 provided on the opposed substrate 31' and the photoresist covering the plurality of touch electrodes 41 and the plurality of signal lines 61 are bonded with the cover plate 91 via the optically clear adhesive layer 81. The cover plate, for example, is made of glass.

For example, the embodiments of the present disclosure provide a touch screen of GFF type, and such capacitive touch screen comprises: the substrate 31, the plurality of touch electrodes 41 provided on the substrate 31, and the plurality of signal lines 61 corresponding to the plurality of touch electrodes 41; the substrate 31 for example is a plastic film, and the substrate 31 includes the touch region 311 for touching and the signal line connection region 313 for external connection of the signal lines; the plurality of touch electrodes 41 are provided in the touch region 311, the plurality of signal lines 61 are routed from the touch region 311 to the signal line connection region 313, the plurality of touch electrodes 41 and portions of the plurality of signal lines 61 in the touch region 311 are covered with the photoresist 51, and portions of the plurality of signal lines 61 in the signal line connection region 313 are not covered with the photoresist. Since the plurality of touch electrodes 41 and the portions of the plurality of signal lines 61 in the touch region 311 are covered with the photoresist 51, the photoresist 51 protects the electrodes and the signal lines therebelow in follow-up processes such as the bonding process. FIG. 2a for example is referred to for the touch region 311 and the signal line connection region 313. The touch screen of GFF type is bonded with the display panel 3 via the optically clear adhesive layer 81. A structure of the display panel 3 may be as described above. The formed touch display panel of GFF type is shown in FIG. 3e.

The embodiments of the present disclosure further provide a preparation method of a capacitive touch screen, as shown from FIG. 4a to FIG. 4d.

The preparation method of the capacitive touch screen comprises: forming a plurality of touch electrodes 41 and a plurality of signal lines 61 corresponding to the plurality of touch electrodes 41 on a substrate 31 by a photolithographic process; wherein, the substrate 31 includes a touch region 311 for touching and a signal line connection region 313 for external connection of the signal lines, the plurality of touch electrodes 41 are provided in the touch region 311, and the plurality of signal lines 61 are routed from the touch region 311 to the signal line connection region 313; reserving the photoresist used in the photolithographic process on the plurality of touch electrodes 41 and portions of the plurality of signal lines 61 in the touch region 311 without reserving the photoresist on portions of the plurality of signal lines 61 in the signal line connection region 313.

For example, the photolithographic process uses a multi-tone mask. The photolithographic process implemented by using the multi-tone mask, for example, is described as follows.

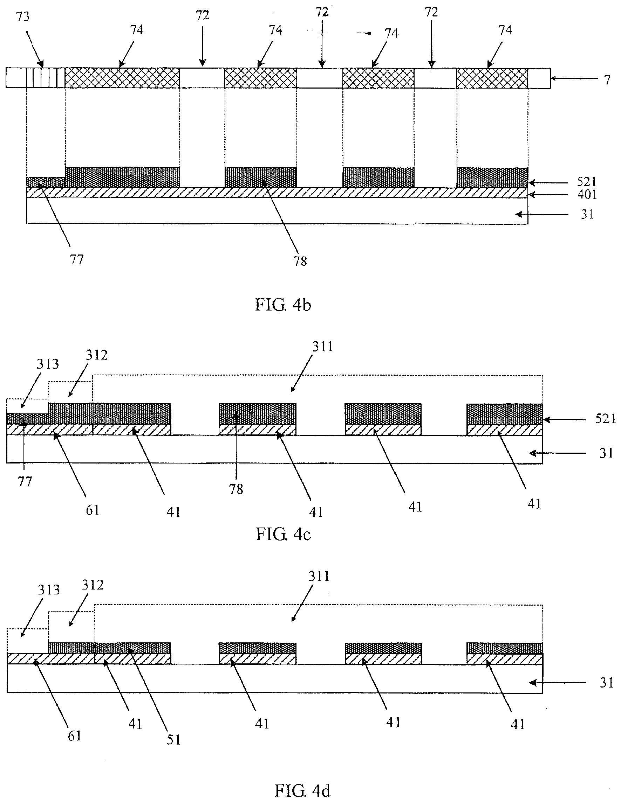

For example, a transparent conductive film 401 is formed on the substrate 31, and a photoresist film 501 is formed on the transparent conductive film 401, as shown in FIG. 4a; and the photoresist film 501 is exposed and developed to form a photoresist pattern 521. As shown in FIG. 4b, a thickness of a portion of the photoresist pattern 521 located in the signal line connection region 313 is less than a thickness of a portion of the photoresist pattern 521 located in the touch region 311; that is, the photoresist pattern 521 has different thicknesses in the signal line connection region 313 and the touch region 311, the photoresist pattern 521 comprises a photoresist pattern 77 having a smaller thickness in the signal line connection region 313 and a photoresist pattern 78 having a larger thickness in the touch region 311. The transparent conductive film 401 is etched by using the photoresist pattern 521 as a mask, to form the plurality of touch electrodes 41 and the plurality of signal lines 61, as shown in FIG. 4c.

An ashing process is performed on the photoresist pattern 521 to remove the portion of the photoresist pattern 521 (that is, the photoresist pattern 77 having the smaller thickness) in the signal line connection region 313, so as to expose the portions of the signal lines 61 in the signal line connection region 313, and reduce the thickness of the portion of the photoresist pattern in the touch region (that is, the thickness of the photoresist pattern 78 having the larger thickness is reduced). In this way, the photoresist pattern 78 having a reduced thickness is reserved in the touch region 311, as shown in FIG. 4d.

That is, the photoresist pattern 78 having the reduced thickness is still reserved to cover the touch electrodes 41 and the signal lines 61. Thus, the portions of the signal lines in the signal line connection region 313 are exposed for external connection of the signal lines. Since the touch electrodes and the portions of the signal lines 61 in the touch region 311 are protected by the photoresist, they are not easily scratched during bonding the signal lines with external circuits.

For example, the substrate 311 further includes a signal line expansion region 312, and the plurality of signal lines 61 enter the touch region 311 after expanded in the signal line expansion region 312, and the photoresist is also reserved on portions of the signal lines 61 in the signal line expansion region 312. That is, during exposing, developing the photoresist film 501 to form the photoresist pattern 521, the photoresist pattern 78 having the larger thickness is formed on the portions of the signal lines in the signal line expansion region 312; during performing the ashing process on the photoresist pattern 521, the photoresist pattern 78 having the larger thickness on the signal line expansion region 312 is also thinned, so that the photoresist pattern having a reduced thickness is reserved in the signal line expansion region 312. As shown in FIGS. 3d and 4d, during bonding the signal lines with external circuits, since the photoresist on the portions of the signal lines in the signal line expansion region 312 is also reserved, the portions of the signal lines in the signal line expansion region 312 are not easily scratched.

It should be noted that, the photoresist may be not reserved on the portions of the signal lines 61 in the signal line expansion region 312, that is, the portions of the plurality of signal lines in the signal line expansion region 312 are not covered with the photoresist. In this case, during exposing, developing the photoresist film 501 to form the photoresist pattern 521, the photoresist pattern 77 having the smaller thickness is formed on the portions of the signal lines in the signal line expansion region 312; during performing the ashing process on the photoresist pattern 521, the photoresist pattern 77 having the smaller thickness on the portions of the signal line expansion region 312 is also removed, as shown in FIG. 3c.

For example, the exposing process as described is implemented by using the multi-tone mask 7. In a case where a positive photoresist is used, a region to be etched on the substrate corresponds to a completely-transmissive region 72 of the mask 7, a region for forming the portions of the signal lines in the signal line connection region 313 corresponds to a semi-transmissive region 73 of the mask 7, and the other region of the mask 7 is a light-tight region 74, as shown in FIG. 4b. For example, the light-tight region 74 corresponds to the touch electrodes 41 and the portions of the signal lines 61 in the touch region 311, or, the light-tight region 74 corresponds to the touch electrodes 41 and the portions of the signal lines 61 in the touch region 311 and the portions of the signal lines 61 in the signal line expansion region 312. After the photoresist is exposed and developed by the multi-tone mask 7, the photoresist pattern 512 having two different thicknesses is formed on a surface of the transparent conductive film 401, that is, the photoresist pattern 78 having the larger thickness is formed in a region corresponding to the light-tight region of the mask 7, and the photoresist pattern 77 having the smaller thickness is formed in a region corresponding to the semi-transmissive region of the mask 7. The multi-tone mask 7 for example is a half-tone mask or a gray-tone mask.

For example, the transparent conductive film 401 is an ITO film.

For example, the substrate 31 is a glass substrate; an OGS touch screen is formed on a liquid crystal display panel by arranging a capacitive touch screen prepared by the above method on the liquid crystal display panel, as shown in FIG. 3b.

For example, in the case that the substrate 31 is an opposed substrate 31' of the liquid crystal display panel, an On-Cell touch display panel is formed, the formed On-Cell touch display panel is shown in FIGS. 3c and 3d, and a structure of the liquid crystal display panel, for example, is as described above. For example, the opposed substrate 31' is a color filter substrate. For example, during fabricating a touch structure, the touch structure is provided on the opposed substrate 31' of the array substrate and opposed substrate bonded with each other.

For example, the substrate 31 is a plastic film, and a GFF touch screen is formed on the liquid crystal display panel by arranging the capacitive touch screen prepared by the above method on the liquid crystal display panel, as shown in FIG. 3e.

The touch display panel provided by the embodiments of the present disclosure may be applied to: a liquid crystal panel, an E-paper, a liquid crystal television, a digital frame, a cell phone, a watch, a tablet computer and any other products or parts having touching and displaying functions.

The embodiments of the present disclosure provide a capacitive touch screen and a preparation method thereof and a touch display panel. The capacitive touch screen comprises the substrate, the plurality of touch electrodes provided on the substrate, and the plurality of signal lines corresponding to the plurality of touch electrodes; the substrate includes the touch region for touching and the signal line connection region for external connection of the signal lines, the plurality of touch electrodes are provided in the touch region, and the plurality of signal lines are routed from the touch region to the signal line connection region; and the plurality of touch electrodes and the portions of the plurality of signal lines in the touch region are covered with a photoresist, and the portions of the plurality of signal lines in the signal line connection region are not covered with the photoresist. In the preparation method, the plurality of touch electrodes and the plurality of signal lines corresponding to the plurality of touch electrodes are formed on the substrate by a photolithographic process; the substrate includes the touch region for touching and the signal line connection region for external connection of the signal lines, the plurality of touch electrodes are provided in the touch region, and the plurality of signal lines are routed from the touch region to the signal line connection region, and the photoresist used in the photolithographic process is reserved on the plurality of touch electrodes and the portions of the plurality of signal lines in the touch region, and no photoresist is reserved on the portions of the plurality of signal lines in the signal line connection region. After the photoresist on the signal line connection region is removed, the photoresist in the other region is reserved, and the reserved photoresist corresponds to the touch electrodes and the portions of the signal lines in the touch region, and therefore, the touch electrodes and the portions of the signal lines in the touch region are protected from being easily scratched in follow-up process. The embodiments of the present disclosure effectively prevent the touch electrodes from being scratched in fabrication processes of the capacitive touch screen and the touch display panel, so that a product yield is improved.

## Claims

1. A capacitive touch panel, comprising: a substrate (31), a plurality of touch electrodes (41) provided on the substrate (31), and a plurality of signal lines (61) corresponding to the plurality of touch electrodes (41), wherein,
the substrate (31) includes a touch region (311) for touching and a signal line connection region (313) for external connection of the signal lines (61), the plurality of touch electrodes (41) are provided in the touch region (311), and the plurality of signal lines (61) are routed from the touch region (311) to the signal line connection region (313), and
the plurality of touch electrodes (41) and portions of the plurality of signal lines (61) in the touch region (311) are covered with a portion (51) of a photoresist (501) used in a photolithographic process for forming the plurality of touch electrodes (41) and the plurality of signal lines (61), said photoresist (51) having been been formed into a photoresist pattern (521) by using a multi-tone mask wherein a thickness of a portion of the photoresist pattern (521) in a signal line connection region (313) is less than a thickness of a portion of the photoresist pattern (521) in a touch region (311) such that portions of the plurality of signal lines (61) in the signal line connection region (313) are not covered with the photoresist (501) used in the photolithographic process for forming the plurality of touch electrodes (41) and the plurality of signal lines (61).

2. The capacitive touch panel according to claim 1, wherein, the touch electrodes (41) comprise a touch driving electrode (411) and /or a touch sensing electrode (412).

3. The capacitive touch panel according to claim 1 or 2, wherein, the touch electrodes (41) and the signal lines (61) are provided in a same layer.

4. The capacitive touch panel according to claim 1 or 2, wherein, the substrate (31) further includes a signal line expansion region (312), the plurality of signal lines (61) enter the touch region (311) after expanded in the signal line expansion region (312), and portions of the signal lines (61) in the signal line expansion region (312) are covered with a portion (51) of the photoresist (501) used in the photolithographic process for forming the plurality of touch electrodes (41) and the plurality of signal lines (61).

5. A preparation method of a capacitive touch panel, comprising:
forming a transparent conductive film (401) on a substrate (31);
forming a photoresist (501) on the transparent conductive film (401);
exposing, developing the photoresist (501) to form a photoresist pattern (521) by using a multi-tone mask, wherein, a thickness of a portion of the photoresist pattern (521) in a signal line connection region (313) is less than a thickness of a portion of the photoresist pattern (521) in a touch region (311);
etching the transparent conductive film (401) by using the photoresist pattern (521) as a mask, to form a plurality of touch electrodes (41) and a plurality of signal lines (61), wherein the touch region (311) is for touching and the signal line connection region (313) is for external connection of the signal lines (61), the touch electrodes (41) are provided in the touch region (311), and the signal lines (61) are routed from the touch region (311) to the signal line connection region (313); and
ashing the photoresist pattern (521), to remove the portion of the photoresist pattern (521) in the signal line connection region (313) but reserve the portion of the photoresist pattern (521) having a reduced thickness in the touch region (311), so that the touch electrodes (41) and portions of the signal lines (61) in the touch region (311) are covered with the portion of the photoresist pattern (521) having the reduced thickness in the touch region (311), and portions of the signal lines (61) in the signal line connection region (313) are not covered with the photoresist pattern (521).

6. The preparation method of the capacitive touch panel according to claim 5, wherein, the multi-tone mask is a half-tone mask or a gray-tone mask.

7. The preparation method of the capacitive touch panel according to claim 5, wherein,
in the case that the photoresist (501) is formed of a positive photoresist, a region to be etched corresponds to a completely-transmissive region of the multi-tone mask, a region for forming the portions of the signal lines (61) in the signal line connection region (313) corresponds to a semi-transmissive region of the multi-tone mask, and a region for forming the touch electrodes (41) and the portions of the signal lines (61) in the touch region (311) corresponds to a light-tight region of the multi-tone mask.

8. The preparation method of the capacitive touch panel according to any one of claims 5 to 7, wherein,
the substrate (31) further includes a signal line expansion region (312), the plurality of signal lines (61) enter the touch region (311) after expanded in the signal line expansion region (312), and a portion of the photoresist pattern (521) is also reserved on portions of the signal lines (61) in the signal line expansion region (312).

9. The preparation method of the capacitive touch panel according to any one of claims 5 to 8, wherein, the substrate (31) is an opposed substrate (31') in a liquid crystal display panel.

10. A touch display panel, comprising a display panel and a capacitive touch panel according to any one of claims 1-4.

11. The touch display panel according to claim 10, wherein, the display panel is a liquid crystal panel, and includes an array substrate, an opposed substrate (31'), and liquid crystal sealed between the array substrate and the opposed substrate (31') by a sealant.

12. The touch display panel according to claim 11, wherein, the capacitive touch panel is provided on the display panel.

## Patentansprüche

1. Kapazitives Berührungspanel mit: einem Substrat (31), einer Vielzahl von Berührungselektroden (41), die auf dem Substrat (31) vorgesehen sind, und einer Vielzahl von Signalleitungen (61), die der Mehrzahl von Berührungselektroden (41) entsprechen, wobei,
das Substrat (31) einen Berührungsbereich (311) zum Berühren und einen Signalleitungsverbindungsbereich (313) zur externen Verbindung der Signalleitungen (61) aufweist, die Vielzahl von Berührungselektroden (41) in dem Berührungsbereich (311) vorgesehen sind und die Vielzahl von Signalleitungen (61) von dem Berührungsbereich (311) zu dem Signalleitungsverbindungsbereich (313) geführt sind, und
die Vielzahl von Berührungselektroden (41) und Teile der Vielzahl von Signalleitungen (61) in dem Berührungsbereich (311) mit einem Teil (51) eines Fotolacks (501) bedeckt sind, der in einem photolithographischen Prozess zum Bilden der Vielzahl von Berührungselektroden (41) und der Vielzahl von Signalleitungen (61) verwendet wurde, wobei der Fotolack (51) in einer Fotolackstruktur (521) unter Verwendung einer Mehrtonmaske geformt wurde, wobei eine Dicke eines Teils der Fotolackstruktur (521) in einem Signalleitungsverbindungsbereich (313) geringer ist als eine Dicke eines Teils des Fotolackstruktur (521) in einem Berührungsbereich (311), sodass Teile der Vielzahl von Signalleitungen (61) in dem Signalleitungsverbindungsbereich (313) nicht mit dem Fotolack (501) bedeckt sind, der in dem photolithographischen Prozess zur Bildung der Vielzahl von Berührungselektroden (41) und der Vielzahl von Signalleitungen (61) verwendet wurde.

2. Kapazitives Berührungspanel nach Anspruch 1, wobei die Berührungselektroden (41) eine Berührungsansteuerelektrode (411) und/oder eine Berührungserfassungselektrode (412) umfassen.

3. Kapazitives Berührungspanel nach Anspruch 1 oder 2, wobei die Berührungselektroden (41) und die Signalleitungen (61) in einer gleichen Schicht vorgesehen sind.

4. Kapazitives Berührungspanel nach Anspruch 1 oder 2, wobei das Substrat (31) ferner einen Signalleitungsausweitungsbereich (312) aufweist, die Vielzahl von Signalleitungen (61) in den Berührungsbereich (311) eintritt, nachdem sie in dem Signalleitungsausweitungsbereich (312) ausgeweitet wurden, und Teile der Signalleitungen (61) in dem Signalleitungsausweitungsbereich (312) mit einem Teil (51) des Fotolacks (501) bedeckt sind, der in dem photolithographischen Prozess zur Bildung der Vielzahl von Berührungselektroden (41) und der Vielzahl von Signalleitungen (61) verwendet wurde.

5. Herstellungsverfahren für einen kapazitives Berührungspanel, mit:
Bilden eines transparenten leitenden Films (401) auf einem Substrat (31);
Bilden eines Fotolacks (501) auf dem transparenten leitenden Film (401);
Belichten, Entwickeln des Fotolacks (501), um eine Fotolackstruktur (521) unter Verwendung einer Mehrtonmaske zu bilden, wobei eine Dicke eines Teils der Fotolackstrukturstruktur (521) in einem Signalleitungsverbindungsbereich (313) geringer ist als eine Dicke eines Teils der Fotolackstruktur (521) in einem Berührungsbereich (311);
Ätzen des transparenten leitenden Films (401) unter Verwendung der Fotolackstruktur (521) als eine Maske, um eine Vielzahl von Berührungselektroden (41) und eine Vielzahl von Signalleitungen (61) zu bilden, wobei der Berührungsbereich (311) zum Berühren und der Signalleitungsverbindungsbereich (313) zum externen Verbinden der Signalleitungen (61) dient, die Berührungselektroden (41) in dem Berührungsbereich (311) vorgesehen sind und die Signalleitungen (61) von dem Berührungsbereich (311) zu dem Signalleitungsverbindungsbereich (313) geführt sind; und
Veraschen der Fotolackstruktur (521), um den Teil der Fotolackstruktur (521) im Signalleitungsverbindungsbereich (313) zu entfernen, aber den Teil der Fotolackstruktur (521) mit einer reduzierten Dicke im Berührungsbereich (311) zurückzubehalten, sodass die Berührungselektroden (41) und Teile der Signalleitungen (61) in dem Berührungsbereich (311) mit dem Teil des Fotolackstruktur (521) mit der reduzierten Dicke in dem Berührungsbereich (311) bedeckt sind, und Teile der Signalleitungen (61) in dem Signalleitungsverbindungsbereich (313) nicht mit dem Fotolackmuster (521) bedeckt sind.

6. Herstellungsverfahren des kapazitiven Berührungspanels nach Anspruch 5, wobei die Mehrtonmaske eine Halbtonmaske oder eine Grautonmaske ist.

7. Herstellungsverfahren des kapazitiven Berührungspanels nach Anspruch 5, wobei,
in dem Fall, dass der Fotolack (501) aus einem positiven Fotolack gebildet ist, ein zu ätzender Bereich einem vollständig durchlässigen Bereich der Mehrtonmaske entspricht, ein Bereich zur Bildung der Teile der Signalleitungen (61) in dem Signalleitungsverbindungsbereich (313) einem halbdurchlässigen Bereich der Mehrtonmaske entspricht, und ein Bereich zur Bildung der Berührungselektroden (41) und der Teile der Signalleitungen (61) in dem Berührungsbereich (311) einem lichtdichten Bereich der Mehrtonmaske entspricht.

8. Herstellungsverfahren des kapazitiven Berührungspanels nach einem der Ansprüche 5 bis 7, wobei,
das Substrat (31) ferner einen Signalleitungsausweitungsbereich (312) enthält, die Vielzahl von Signalleitungen (61) in den Berührungsbereich (311) eintreten, nachdem sie in dem Signalleitungsausweitungsbereich (312) ausgeitet wurden, und ein Teil der Fotolackstruktur (521) auch auf Teilen der Signalleitungen (61) in dem Signalleitungsausweitungsbereich (312) zurückbehalten ist.

9. Herstellungsverfahren des kapazitiven Berührungspanels nach einem der Ansprüche 5 bis 8, wobei das Substrat (31) ein gegenüberliegendes Substrat (31') in einem Flüssigkristallanzeigepanel ist.

10. Berührungsanzeigepanel mit einem Anzeigepanel und einem kapazitiven Berührungspanel nach einem der Ansprüche 1 bis 4.

11. Berührungsanzeigepanel nach Anspruch 10, wobei das Anzeigepanel ein Flüssigkristallpanel ist und ein Matrixsubstrat, ein gegenüberliegendes Substrat (31') und Flüssigkristall aufweist, das zwischen dem Matrixsubstrat und dem gegenüberliegenden Substrat (31') durch ein Dichtungsmittel abgedichtet ist.

12. Berührungsanzeigepanel nach Anspruch 11, wobei das kapazitive Berührungspanel auf dem Anzeigepanel vorgesehen ist.

## Revendications

1. Panneau tactile capacitif, comprenant : un substrat (31), une pluralité d'électrodes tactiles (41) qui sont prévues sur le substrat (31) et une pluralité de lignes de signal (61) qui correspondent aux électrodes tactiles de la pluralité d'électrodes tactiles (41), dans lequel :
le substrat (31) inclut une région tactile (311) pour un effleurement tactile et une région de connexion de lignes de signal (313) pour une connexion externe des lignes de signal (61), les électrodes tactiles de la pluralité d'électrodes tactiles (41) sont prévues dans la région tactile (311) et les lignes de signal de la pluralité de lignes de signal (61) sont routées depuis la région tactile (311) jusqu'à la région de connexion de lignes de signal (313) ; et
les électrodes tactiles de la pluralité d'électrodes tactiles (41) et des sections de la pluralité de lignes de signal (61) dans la région tactile (311) sont recouvertes par une section (51) d'une photoréserve (501) qui est utilisée au niveau d'un processus de photolithographie pour former la pluralité d'électrodes tactiles (41) et la pluralité de lignes de signal (61), ladite photoréserve (51) ayant été formée selon un motif de photoréserve (521) en utilisant un masque à multiples tons, dans lequel une épaisseur d'une section du motif de photoréserve (521) dans une région de connexion de lignes de signal (313) est inférieure à une épaisseur d'une section du motif de photoréserve (521) dans une région tactile (311) de telle sorte que des sections de la pluralité de lignes de signal (61) dans la région de connexion de lignes de signal (313) ne soient pas recouvertes par la photoréserve (501) qui est utilisée au niveau du processus de photolithographie pour former la pluralité d'électrodes tactiles (41) et la pluralité de lignes de signal (61).

2. Panneau tactile capacitif selon la revendication 1, dans lequel les électrodes tactiles (41) comprennent une électrode de pilotage d'effleurement tactile (411) et/ou une électrode de détection d'effleurement tactile (412).

3. Panneau tactile capacitif selon la revendication 1 ou 2, dans lequel les électrodes tactiles (41) et les lignes de signal (61) sont prévues dans une même couche.

4. Panneau tactile capacitif selon la revendication 1 ou 2, dans lequel le substrat (31) inclut en outre une région d'extension de lignes de signal (312), les lignes de signal de la pluralité de lignes de signal (61) pénètrent à l'intérieur de la région tactile (311) après qu'elles ont été étendues dans la région d'extension de lignes de signal (312), et des sections des lignes de signal (61) dans la région d'extension de lignes de signal (312) sont recouvertes par une section (51) de la photoréserve (501) qui est utilisée lors du processus de photolithographie pour former la pluralité d'électrodes tactiles (41) et la pluralité de lignes de signal (61).

5. Procédé de préparation d'un panneau tactile capacitif, comprenant :
la formation d'un film conducteur transparent (401) sur un substrat (31) ;
la formation d'une photoréserve (501) sur le film conducteur transparent (401) ;
l'exposition et le développement de la photoréserve (501) pour former un motif de photoréserve (521) en utilisant un masque à multiples tons, dans lequel une épaisseur d'une section du motif de photoréserve (521) dans une région de connexion de lignes de signal (313) est inférieure à une épaisseur d'une section du motif de photoréserve (521) dans une région tactile (311) ;
la gravure du film conducteur transparent (401) en utilisant le motif de photoréserve (521) en tant que masque, pour former une pluralité d'électrodes tactiles (41) et une pluralité de lignes de signal (61), dans lequel la région tactile (311) est pour un effleurement tactile et la région de connexion de lignes de signal (313) est pour une connexion externe des lignes de signal (61), les électrodes tactiles (41) sont prévues dans la région tactile (311), et les lignes de signal (61) sont routées depuis la région tactile (311) jusqu'à la région de connexion de lignes de signal (313) ; et
la calcination du motif de photoréserve (521) afin de supprimer la section du motif de photoréserve (521) dans la région de connexion de lignes de signal (313) mais afin de préserver la section du motif de photoréserve (521) qui présente une épaisseur réduite dans la région tactile (311) de telle sorte que les électrodes tactiles (41) et des sections des lignes de signal (61) dans la région tactile (311) soient recouvertes par la section du motif de photoréserve (521) qui présente l'épaisseur réduite dans la région tactile (311) et que des sections des lignes de signal (61) dans la région de connexion de lignes de signal (313) ne soient pas recouvertes par le motif de photoréserve (521).

6. Procédé de préparation du panneau tactile capacitif selon la revendication 5, dans lequel le masque à multiples tons est un masque à demi-tons ou un masque à tons de gris.

7. Procédé de préparation du panneau tactile capacitif selon la revendication 5, dans lequel :
dans le cas où la photoréserve (501) est formée par une photoréserve positive, une région qui doit être gravée correspond à une région complètement transmissive du masque à multiples tons, une région pour former les sections des lignes de signal (61) dans la région de connexion de lignes de signal (313) correspond à une région semi-transmissive du masque à multiples tons et une région pour former les électrodes tactiles (41) et les sections des lignes de signal (61) dans la région tactile (311) correspond à une région étanche à la lumière du masque à multiples tons.

8. Procédé de préparation du panneau tactile capacitif selon l'une quelconque des revendications 5 à 7, dans lequel :
le substrat (31) inclut en outre une région d'extension de lignes de signal (312), les lignes de signal de la pluralité de lignes de signal (61) pénètrent à l'intérieur de la région tactile (311) après qu'elles ont été étendues dans la région d'extension de lignes de signal (312), et une section du motif de photoréserve (521) est également préservée sur des sections des lignes de signal (61) dans la région d'extension de lignes de signal (312).

9. Procédé de préparation du panneau tactile capacitif selon l'une quelconque des revendications 5 à 8, dans lequel le substrat (31) est un substrat opposé (31') dans un panneau d'affichage à cristal liquide.

10. Panneau d'affichage tactile, comprenant un panneau d'affichage et un panneau tactile capacitif selon l'une quelconque des revendications 1 à 4.

11. Panneau d'affichage tactile selon la revendication 10, dans lequel le panneau d'affichage est un panneau à cristal liquide et il inclut un substrat de matrice, un substrat opposé (31') et un cristal liquide qui est scellé de façon étanche entre le substrat de matrice et le substrat opposé (31') au moyen d'un agent de scellement et d'étanchéité.

12. Panneau d'affichage tactile selon la revendication 11, dans lequel le panneau tactile capacitif est apposé sur le panneau d'affichage.
